# EUROPÄISCHE PATENTSCHRIFT

(11) **EP 2 058 885 B1**
(45) Veröffentlichungstag und Bekanntmachung des Hinweises auf die Patenterteilung: **26.10.2011**
(21) Anmeldenummer: 08167684.3
(22) Anmeldetag: 28.10.2008
(51) Int. Cl.: H01M 8/04, H01M 8/06

(54) **Brennstoffzellensystem**
Fuel cell system
Système de cellules combustibles

(30) Priorität: 30.10.2007 DE 102007051705
(43) Veröffentlichungstag der Anmeldung: 13.05.2009
(73) Patentinhaber: J. Eberspächer GmbH & Co. KG, 73730 Esslingen (DE)
(72) Erfinder: Kaupert, Andreas, 73730, Esslingen (DE); Reiners, Karsten, 73732, Esslingen (DE)
(74) Vertreter: BRP Renaud & Partner

(56) Entgegenhaltungen:
- EP-A- 1 235 291
- EP-A- 1 557 896
- EP-A- 1 845 577
- EP-A- 1 845 578
- AT-A2- 502 130
- JP-A- 2003 151 592
- US-A1- 2005 106 429
- US-A1- 2007 065 687

## Beschreibung

Die vorliegende Erfindung betrifft ein Brennstoffzellensystem, das insbesondere in einem Kraftfahrzeug angeordnet sein kann, mit den Merkmalen des Oberbegriffs des Anspruchs 1. Die Erfindung betrifft außerdem ein Verfahren zum Betreiben eines derartigen Brennstoffzellensystems.

Ein Brennstoffzellensystem der eingangs genannten Art ist aus der AT 502 130 A1 bekannt und umfasst einen Reformer zum Generieren eines Wasserstoffgas enthaltenden Reformatgases aus einen Wasserstoff enthaltenden Brennstoff und einem Sauerstoff enthaltenden Oxidator. Außerdem ist eine Brennstoffzelle zum Generieren von elektrischem Strom durch Umsetzen von als Anodengas dienendem Reformatgas mit einem Sauerstoffgas enthaltenden Kathodengas vorgesehen. Desweiteren umfasst das bekannte Brennstoffzellensystem eine Oxidatorversorgungseinrichtung zur Zuführung von Oxidator zum Reformer, die eine Oxidatorleitung und eine darin angeordnete Fördereinrichtung aufweist. Ferner ist eine Rezirkulationsleitung vorgesehen, die einerseits an eine von der Brennstoffzelle abführende Abgasleitung angeschlossen ist und andererseits stromauf der Fördereinrichtung an die Oxidatorleitung angeschlossen ist. Beim bekannten Brennstoffzellensystem werden die heißen Brennstoffzellenabgase direkt dem Oxidator zugeführt, wodurch es zu einer hohen thermischen Belastung der Fördereinrichtung kommen kann.

Aus der EP 1 845 577 A2 ist es bekannt, bei einem Brennstoffzellensystem in der Rezirkulationsleitung einen Rezirkulationswärmeübertrager anzuordnen, der wärmeübertragend mit der zum Reformer führenden Oxidatorleitung gekoppelt ist. Hierdurch kann die thermische Belastung der Fördereinrichtung durch die Rückführung heißer Brennstoffzellenabgase reduziert werden.

Ein weiteres Brennstoffzellensystem ist aus der EP 1 235 291 A2 bekannt.

Aus der DE 10 2004 002 337 A1 ist ein Brennstoffzellensystem bekannt, das einen Reformer zum Generieren eines Wasserstoffgas enthaltenden Reformatgases aus einem Wasserstoff enthaltenden Brennstoff und einem Sauerstoff enthaltenden Oxidator aufweist. Das Brennstoffzellensystem umfasst außerdem eine Brennstoffzelle zum Generieren von elektrischem Strom durch Umsetzen von als Anodengas dienendem Reformatgas mit einem Sauerstoffgas enthaltenden Kathodengas. Ferner ist eine Oxidatorversorgungseinrichtung zur Zuführung von Oxidator zum Reformer vorgesehen, die eine Oxidatorleitung und eine darin angeordnete Fördereinrichtung aufweist. Des weiteren ist das Brennstoffzellensystem mit einer Rezirkulationsleitung ausgestattet, die einerseits an eine von der Brennstoffzelle abführende Abgasleitung angeschlossen ist und die andererseits an den Reformer angeschlossen ist, um diesen mit dem rückgeführten Anodenabgas zu versorgen. In der Rezirkulationsleitung ist dabei eine zusätzliche Fördereinrichtung zum Antreiben des Anodenabgases angeordnet.

Da das Anodenabgas vergleichsweise hohe Temperaturen aufweisen kann, sind an die in der Rezirkulationsleitung angeordnete Fördereinrichtung relativ hohe Anforderungen an die Temperaturbeständigkeit zu stellen. Zusätzlich kann es erforderlich sein, in die Rezirkulationsleitung einen Wärmeübertrager einzubinden, welcher dem rezirkulierten Anodenabgas stromauf der in der Rezirkulationsleitung angeordneten Fördereinrichtung Wärme entzieht, um so die Gefahr einer Überhitzung der in der Rezirkulationsleitung angeordneten Fördereinrichtung zu reduzieren. Der Aufwand separater Fördereinrichtungen ist vergleichsweise groß.

Die vorliegende Erfindung beschäftigt sich mit dem Problem, für ein Brennstoffzellensystem beziehungsweise für ein zugehöriges Betriebsverfahren eine verbesserte Ausführungsform anzugeben, die sich insbesondere durch eine reduzierte Beschädigungsgefahr für die Fördereinrichtung auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, zum Antreiben des dem Reformer rezirkulierten Anodenabgases und zum Antreiben des dem Reformer zugeführten Oxidatorgases die gleiche Fördereinrichtung zu verwenden. Zu diesem Zweck ist die Rezirkulationsleitung einerseits wie bisher an die Anodenabgasleitung angeschlossen und andererseits erfindungsgemäß an die Oxidatorleitung stromauf der darin angeordneten Fördereinrichtung. Hierdurch kann die Fördereinrichtung sowohl Oxidatorgas als auch Anodenabgas ansaugen und dem Reformer zuführen. Somit kann hinsichtlich der Eduktversorgung des Reformers auf eine weitere Fördereinrichtung verzichtet werden. Gleichzeitig baut der reformerseitige Teil des Brennstoffzellensystems dadurch vergleichsweise kompakt.

Erfindungsgemäß ist ein Rezirkulationswärmeübertrager vorgesehen, der einerseits in die Rezirkulationsleitung und andererseits in die Oxidatorleitung eingebunden ist. Durch diese Maßnahme kann eine Beaufschlagung der Fördereinrichtung mit heißen Anodenabgasen vermieden werden, wobei gleichzeitig eine Vorwärmung des dem Reformer zugeführten Oxidatorgases realisierbar ist.

Erfindungsgemäß ist außerdem ein steuerbarer Bypass zur Umgehung des Rezirkulationswärmeübertragers vorgesehen. Durch diese Bauweise ist es insbesondere möglich, das Brennstoffzellensystem während eines Kaltstarts mit geöffnetem Bypass zu betreiben, wodurch das rezirkulierte Anodenabgas nahezu ungekühlt dem Reformer zuführbar ist. Hierdurch kann der Reformer vergleichsweise rasch auf seine Betriebstemperatur gebracht werden. Sobald der Reformer seine Betriebstemperatur erreicht hat oder sobald die Temperatur des Reformatgases eine vorbestimmte Grenztemperatur erreicht, kann der Bypass zunehmend oder vollständig gesperrt werden, um so eine Durchströmung des Rezirkulationswärmeübertragers zu bewirken, was zu einer Temperaturabsenkung im Anodenabgas führt. Die zeitliche Verkürzung der Warmlaufphase des Reformers erhöht den energetischen Wirkungsgrad des Reformers und des gesamten Brennstoffzellensystems.

Zusätzlich oder alternativ kann der Bypass auch dazu genutzt werden, den Rezirkulationswärmeübertrager sowie den stromab davon liegenden Teil des Rezirkulationspfades möglichst rasch auf eine Temperatur zu bringen, die oberhalb einer Kondensationstemperatur für Rest-Kohlenwasserstoffe liegt, die im rezirkulierten Anodenabgas enthalten sein können. Hierdurch kann die Funktionssicherheit des Reformers gesteigert werden.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in der Zeichnung dargestellt und werden in der nachfolgenden Beschreibung näher erläutert.

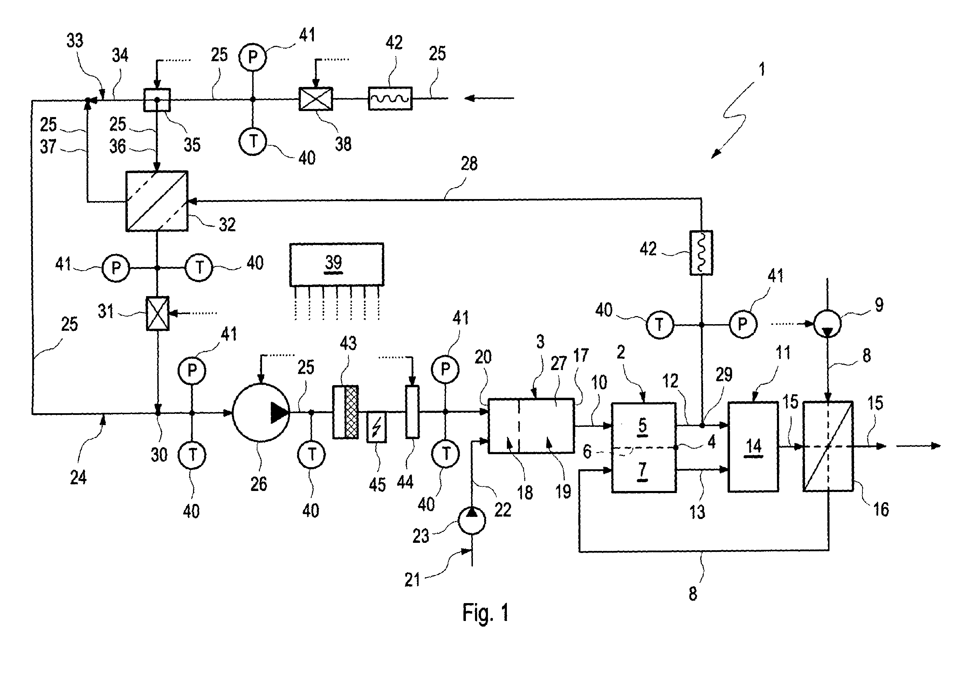

Die einzige Fig. 1 zeigt eine stark vereinfachte, schaltplanartige Prinzipdarstellung eines Brennstoffzellensystems.

Entsprechend Fig. 1 umfasst ein Brennstoffzellensystem 1 zumindest eine Brennstoffzelle 2 sowie wenigstens einen Reformer 3. Die Brennstoffzelle 2 generiert in an sich bekannter Weise elektrischen Strom, der zum Beispiel an wenigstens einem elektrischen Anschluss 4 abgreifbar ist. Hierzu umfasst die Brennstoffzelle 2 eine Anodenseite 5, die durch ein Elektrolyt 6 von einer Kathodenseite 7 getrennt ist. Mit Hilfe des Elektrolyten 6 erfolgt in der Brennstoffzelle 2 eine Umsetzung eines anodenseitig zugeführten Wasserstoffgas enthaltenden Anodengases mit einem kathodenseitig zugeführten Sauerstoffgas enthaltenden Kathodengas. Hierzu wird der Brennstoffzelle 2 das Kathodengas über eine Kathodengasleitung 8 zugeführt, in der eine Fördereinrichtung 9, zum Beispiel ein Gebläse, angeordnet ist. Beim Kathodengas handelt es sich vorzugsweise um Luft. Ferner wird der Anodenseite 5 der Brennstoffzelle 2 über eine Anodengasleitung 10 Anodengas zugeführt.

Bei der Brennstoffzelle 2 kann es sich um eine Hochtemperatur-Brennstoffzelle handeln, insbesondere um eine Festkörper-Brennstoffzelle oder um eine SOFC-Brennstoffzelle. Alternativ kann es sich bei der Brennstoffzelle 2 auch um eine Niedertemperatur-Brennstoffzelle handeln, die beispielsweise mit einer Protonen-Transport-Membran oder mit einer Polymer-Elektrolyt-Membran arbeitet, sogenannte PEM-Brennstoffzelle.

Der Brennstoffzelle 2 kann ein Restgasbrenner 11 nachgeordnet sein, dem eingangsseitig über eine Anodenabgasleitung 12 Anodenabgas und über eine Kathodenabgasleitung 13 Kathodenabgas von der Brennstoffzelle 2 zugeführt wird. In einem Brennraum 14 des Restgasbrenners 11 kann mit offener Flamme oder durch katalytische Reaktion eine Umsetzung von Anodenabgas und Kathodenabgas erfolgen. Dabei entstehendes Brennerabgas kann vom Restgasbrenner 11 ausgangsseitig über eine Abgasleitung 15 abgeführt werden. Im gezeigten Beispiel ist in die Abgasleitung 15 ein Wärmeübertrager 16 eingebunden, in den außerdem die Kathodengasleitung 8 eingebunden ist. Auf diese Weise kann die Wärme des Brennerabgases zum Vorwärmen des Kathodengases genutzt werden. Diesem Wärmeübertrager 16 können in der Abgasleitung 15 weitere Komponenten nachgeordnet sein, wie zum Beispiel wenigstens ein weiterer Wärmeübertrager sowie Abgasbehandlungseinrichtungen, wie zum Beispiel ein Oxidationskatalysator.

Im gezeigten Beispiel bilden die Brennstoffzelle 2, der Restgasbrenner 11 und der Wärmeübertrager 16 jeweils separate Bauteile. Es ist klar, dass zumindest zwei dieser Bauteile bei einer anderen Ausführungsform integral ausgebildet sein können. So ist es beispielsweise möglich, den Restgasbrenner 11 in eine Ausgangsseite der Brennstoffzelle 2 baulich zu integrieren. Zusätzlich oder alternativ kann der Wärmeübertrager 16 in eine Ausgangsseite des Restgasbrenners 11 baulich integriert werden.

Der Reformer 3 dient dazu, ein Wasserstoffgas enthaltendes Reformatgas zu generieren, das der Brennstoffzelle 2 als Anodengas zuführbar ist. Dementsprechend ist die Anodengasleitung 10 eingangsseitig an eine Ausgangsseite 17 des Reformers 3 angeschlossen. Der Reformer 3 enthält beispielsweise einen Gemischbildungsabschnitt 18 und einen diesbezüglich nachgeordneten Reformierungsabschnitt 19. Der Reformer 3 erhält über seine Eingangsseite 20 zum einen einen Wasserstoff enthaltenden Brennstoff und zum anderen einen geeigneten Oxidator. Hierzu ist eine Brennstoffzuführung 21 vorgesehen, die eine Brennstoffleitung 22 umfasst, in der eine geeignete Fördereinrichtung 23 angeordnet ist, bei der es sich beispielsweise um eine Pumpe handeln kann. Als Brennstoff eignet sich grundsätzlich jeder beliebige flüssige oder gasförmige Kohlenwasserstoff, wie zum Beispiel Erdgas, Diesel, Benzin, Biokraftstoff, der insbesondere auch einer Brennkraftmaschine eines mit dem Brennstoffzellensystem 1 ausgestatteten Fahrzeugs zugeführt wird.

Zur Versorgung mit Oxidator ist eine Oxidatorversorgungseinrichtung 24 vorgesehen, die eine Oxidatorleitung 25 sowie eine darin angeordnete Fördereinrichtung 26 umfasst. Als Oxidator oder Oxidatorgas eignet sich in besondere Weise Luft.

Im Gemischbildungsabschnitt 18 erfolgt eine intensive Durchmischung des zugeführten Brennstoffs sowie des zugeführten Oxidators. Sofern es sich beim Brennstoff um einen flüssigen Kraftstoff handelt, erfolgt im Gemischbildungsabschnitt 18 außerdem eine Verdampfung des Kraftstoffs. Dies kann beispielsweise mittels kalter Flamme realisiert werden. Im Reformierungsabschnitt 19 erfolgt mittels partieller Oxidation eine Umsetzung des Brennstoffs und des Oxidators in das Wasserstoffgas enthaltende Synthesegas oder Reformatgas oder Anodengas. Hierzu enthält der Reformierungsabschnitt 19 zumindest einen entsprechenden Katalysator 27.

Das hier gezeigte Brennstoffzellensystem 1 weist außerdem eine Rezirkulationsleitung 28 auf, mit deren Hilfe Anodenabgas dem Reformer 3 eingangsseitig zuführbar ist. Hierzu ist die Rezirkulationsleitung 28 einerseits bei 29 an die Anodenabgasleitung 12 angeschlossen und andererseits bei 30 an die Oxidatorleitung 25. Die mit 30 bezeichnete Einleitstelle befindet sich dabei stromauf der Fördereinrichtung 26 der Oxidatorversorgungseinrichtung 24. Bei dieser Fördereinrichtung 26 kann es sich um eine Pumpe, ein Gebläse, einen Kompressor oder einen Verdichter oder dergleichen handeln. In der Rezirkulationsleitung 28 selbst ist keine Fördereinrichtung enthalten. Im Beispiel ist in der Rezirkulationsleitung 28 eine Ventileinrichtung 31 angeordnet, mit deren Hilfe die Durchflussmenge in der Rezirkulationsleitung 28 verändert werden kann. Die Menge des rückgeführten Anodenabgases kann somit verändert werden. Die Ventileinrichtung 31 ermöglicht zumindest zwei Endstellungen, nämlich "ZU" und "AUF". Bevorzugt ermöglicht die Ventileinrichtung 31 außerdem wenigstens eine Zwischenstellung. Insbesondere kann mit Hilfe der Ventileinrichtung 31 die Menge des rückgeführten Anodenabgases quasi beliebig eingestellt werden.

Ferner ist bevorzugt ein Rezirkulationswärmeübertrager 32 vorgesehen, der einerseits in die Rezirkulationsleitung 28 und andererseits in die Oxidatorleitung 25 eingebunden ist. Auf diese Weise kann mit Hilfe des Rezirkulationswärmeübertragers 32 Wärme vom rückgeführten Anodenabgas auf das dem Reformer 3 zuzuführende Oxidatorgas übertragen werden. Dies führt zu einer Kühlung des Anodenabgases, was die Gefahr einer Überhitzung der Fördereinrichtung 26 reduziert.

Die hier gezeigte Ausführungsform zeichnet sich außerdem dadurch aus, dass ein steuerbarer Bypass 33 vorgesehen ist, mit dessen Hilfe der Rezirkulationswärmeübertrager 32 innerhalb der Oxidatorleitung 25 umgehbar ist. Hierzu umfasst besagter Bypass 33 eine Bypassleitung 34 sowie eine Ventileinrichtung 35. Die Bypassleitung 34 verbindet einen zum Rezirkulationswärmeübertrager 32 führenden Vorlauf 36 der Oxidatorleitung 25 mit einem vom Rezirkulationswärmeübertrager 32 kommenden Rücklauf 37 der Oxidatorleitung 25. Die Ventileinrichtung 35 ist so angeordnet, dass sie die Oxidatorleitung 25 wahlweise mit der Bypassleitung 34 oder mit dem Vorlauf 36 verbinden kann. Ebenso ist es grundsätzlich möglich, die Ventileinrichtung 35 am anderen Ende der Bypassleitung 34 anzuordnen, so dass sie die Oxidatorleitung 25 wahlweise mit der Bypassleitung 34 oder mit dem Rücklauf 37 verbinden kann. Es ist klar, dass die Ventileinrichtung 35 grundsätzlich zumindest zwei Endstellungen realisieren kann, bei denen das Oxidatorgas entweder ausschließlich durch die Bypassleitung 34 unter vollständiger Umgehung des Rezirkulationswärmeübertragers 32 strömt oder ausschließlich über Vorlauf 36 und Rücklauf 37 durch die Oxidatorleitung 25 und somit vollständig durch den Rezirkulationswärmeübertrager 32 führt. Des weiteren kann die Ventileinrichtung 35 optional auch so ausgestaltet sein, dass sie zumindest einen oder quasi beliebige Mischzustände für die Durchströmung der Bypassleitung 34 und für die Durchströmung des Rezirkulationswärmeübertragers 32 einstellen kann.

In der Oxidatorleitung 25 kann ebenfalls eine Ventileinrichtung 38 angeordnet sein, mit deren Hilfe die Durchflussmenge innerhalb der Oxidatorleitung 25 verändert werden kann. Auch hier sind zumindest zwei Endstellungen "AUF" und "ZU" denkbar sowie wenigstens eine oder bevorzugt beliebige Zwischenstellungen. Sofern Zwischenstellungen realisierbar sind, kann die Ventileinrichtung 38 zum Einstellen einer gewünschten Oxidatorgasmenge angesteuert werden.

Das hier gezeigte Brennstoffzellensystem 1 umfasst außerdem eine Steuerung 39, die mit den steuerbaren Komponenten des Brennstoffzellensystems 1, wie zum Beispiel mit den Fördereinrichtungen 9, 23, 26 sowie mit den Ventileinrichtungen 31, 35, 38 auf geeignete Weise zusammenwirkt. Des weiteren kann die Steuerung 39 mit einer Sensorik zusammenwirken, die beispielsweise mehrere Temperatursensoren 40, mehrere Drucksensoren 41 sowie Gasstrommesser 42 aufweisen kann. Die hier exemplarisch dargestellten Temperatursensoren 40, Drucksensoren 41 und Gasstrommesser 42 können einzeln oder in beliebiger Kombination realisiert werden. Beispielsweise befinden sich je ein Temperatursensor 40 und ein Drucksensor 41 innerhalb der Oxidatorleitung 25 zwischen den Ventileinrichtungen 35 und 38 sowie zwischen der Einleitstelle 30 und der Fördereinrichtung 26 und zwischen der Fördereinrichtung 26 und dem Reformer 3. Ein weiterer Temperatursensor 40 kann stromab der Fördereinrichtung 26 und stromauf einer Flammensperre 43 angeordnet sein, die in der Oxidatorleitung 25 stromab der Fördereinrichtung 26 angeordnet ist. Darüber hinaus ist im Beispiel noch eine Lambda-Sonde 44 vorgesehen, die ebenfalls mit der Steuerung 39 kommuniziert und die hier in der Oxidatorleitung 25 zwischen dem Reformer 3 und der Fördereinrichtung 26, insbesondere stromab der Flammensperre 43 angeordnet ist. In der Rezirkulationsleitung 28 sind zwischen dem Rezirkulationswärmeübertrager 32 und der Einleitstelle 30 beziehungsweise zwischen dem Rezirkulationswärmeübertrager 32 und der Ventileinrichtung 31 ebenfalls ein Temperatursensor 40 und ein Drucksensor 41 angeordnet. Ein weiterer Temperatursensor 40 sowie ein zusätzlicher Drucksensor 41 können stromauf des Rezirkulationswärmeübertragers 32 vorgesehen sein, vorzugsweise stromauf eines Gasstrommessers 42. Dieser Gasstrommesser 42 ist in der Rezirkulationsleitung 28 stromauf des Rezirkulationswärmeübertragers 32 angeordnet. Ebenfalls kann in der Oxidatorleitung 25 ein solcher Gasstrommesser 42 angeordnet sein, und zwar vorzugsweise stromauf des Bypasses 33 und/oder stromauf der Ventileinrichtung 38.

Das Brennstoffzellensystem 1 kann beispielsweise wie folgt betrieben werden.

Im Falle eines Kaltstarts, bei dem die Komponenten des Brennstoffzellensystems 1 beziehungsweise zumindest des Reformers 3 Umgebungstemperatur aufweisen, kann die Steuerung 39 den Bypass 33 aktivieren, so dass das mit Hilfe der Fördereinrichtung 26 dem Reformer 3 zugeführte Oxidatorgas den Rezirkulationswärmeübertrager 32 im wesentlichen vollständig umgeht. Gleichzeitig kann für diesen Kaltstartbetrieb oder Warmlaufbetrieb die in der Rezirkulationsleitung 28 angeordnete Ventileinrichtung 31 zum Öffnen der Rezirkulationsleitung 28 angesteuert werden. In der Folge kann die Fördereinrichtung 26 zusätzlich Anodenabgas ansaugen. Durch die Messung des angesaugten Anodenabgasstroms und/oder des Drucks in der Rezirkulationsleitung 28 und durch die Messung des durch die Oxidatorleitung 25 Oxidatorgasstroms kann die Steuerung 39 durch entsprechendes Ansteuern der Ventileinrichtung in 31 und 38 eine gewünschte Anodenabgasrückführrate beziehungsweise ein gewünschtes Mischungsverhältnis zwischen rückgeführtem Anodenabgas und zugeführtem Oxidatorgas einstellen. Durch eine vergleichsweise hohe Menge an rückgeführtem Anodenabgas kann dem Reformer 3 vergleichsweise viel Wärme innerhalb relativ kurzer Zeit zugeführt werden, wodurch dieser vergleichsweise rasch seine Betriebstemperatur erreichen kann. Insbesondere kann das rückgeführte Anodenabgas, das je nach Aktivität der Brennstoffzelle 2 mehr oder weniger Wasserstoffgas enthält, durch Verbrennung mit dem Oxidator eine sehr rasche Aufheizung des Reformers 3 ermöglichen. Zum Fremdzünden des Gemischs kann optional eine Zündeinrichtung 45, z.B. ein Glühstift oder eine Zündkerze vorgesehen sein, insbesondere zwischen der Flammensperre 43 und der Lambdasonde 44.

Der Bypass 33 kann nun zumindest so lange geöffnet bleiben, bis die Temperatur im Rezirkulationspfad 28 und insbesondere im Rezirkulationswärmeübertrager 32 eine Kondensationstemperatur übersteigt, bei welcher gegebenenfalls im Anodenabgas enthaltene Rest-Kohlenwasserstoffe kondensieren können. Bei voll geöffnetem Bypass 33 bewirken die rückgeführten Anodenabgase eine rasche Aufheizung des Rezirkulationswärmeübertragers 32. Hierdurch kann bei zunehmendem Einleiten von vergleichsweise kaltem Oxidatorgas die für einen zuverlässigen und stabilen Betrieb gewünschte Vermeidung einer Kondensatbildung stromauf des Reformers 3 vermieden werden.

Sobald zumindest eine der folgenden Temperaturen eine, insbesondere jeweils individuell festgelegte, vorbestimmte Grenztemperatur erreicht, steuert die Steuerung 39 die Ventileinrichtung 35 des Bypasses 33 abhängig zum zunehmenden oder vollständigen Sperren des Bypasses 33 an. Bei den hier beobachteten Temperaturen handelt es sich insbesondere um die Temperatur des Reformers 3, die Temperatur des Rezirkulationswärmeübertragers 32, die Temperatur der in der Rezirkulationsleitung 28 angeordneten Ventileinrichtung 31, die Temperatur der Fördereinrichtung 26, die Temperatur des Anodenabgases sowie die Temperatur eines Gemischs aus Oxidator und zugemischtem, rückgeführtem Anodenabgas.

Die Versorgung des Reformers 3 mit Oxidatorgas und mit rückgeführtem Anodenabgas erfolgt somit über eine Einheit, welche die Rezirkulationsleitung 28, die Oxidatorleitung 25 und eine gemeinsame Fördereinrichtung 26 umfasst. Dabei strömt in der Oxidatorleitung 25 im Falle einer Rückführung von Anodenabgas ab der Einleitstelle 30 sowohl Oxidatorgas als auch Anodenabgas. Diese Einheit kann insbesondere vergleichsweise kompakt realisiert werden, was den Bauraumbedarf für das Brennstoffzellensystem 1 reduziert.

## Patentansprüche

1. Brennstoffzellensystem, insbesondere in einem Kraftfahrzeug,
- mit wenigstens einem Reformer (3) zum Generieren eines Wasserstoffgas enthaltenden Reformatgases aus einem Wasserstoff enthaltenden Brennstoff und einem Sauerstoff enthaltenden Oxidator,
- mit mindestens einer Brennstoffzelle (2) zum Generieren von elektrischem Strom durch Umsetzen von als Anodengas dienendem Reformatgas mit einem Sauerstoffgas enthaltenden Kathodengas,
- mit einer Oxidatorversorgungseinrichtung (24) zur Zuführung von Oxidator zum Reformer (3),
- wobei die Oxidatorversorgungseinrichtung (24) eine Oxidatorleitung (25) und eine darin angeordnete Fördereinrichtung (26) aufweist,
- wobei eine Rezirkulationsleitung (28) vorgesehen ist, die einerseits an eine von der Brennstoffzelle (2) abführende Abgasleitung (12) angeschlossen ist,
- wobei die Rezirkulationsleitung (28) andererseits stromauf der Fördereinrichtung (26) an die Oxidatorleitung (25) angeschlossen ist
**dadurch gekennzeichnet,**
- **dass** ein Rezirkulationswärmeübertrager (32) vorgesehen ist, der einerseits in die Rezirkulationsleitung (28) und andererseits in die Oxidatorleitung (25) eingebunden ist,
- **dass** die Oxidatorleitung (25) einen steuerbaren Bypass (33) zur Umgehung des Rezirkulationswärmeübertragers (32) umfasst.

2. Brennstoffzellensystem nach Anspruch 1,
**dadurch gekennzeichnet,**
**dass** in der Rezirkulationsleitung (28) eine Ventileinrichtung (31) zum Verändern der Durchflussmenge in der Rezirkulationsleitung (28) angeordnet ist.

3. Brennstoffzellensystem nach Anspruch 2,
**dadurch gekennzeichnet,**
**dass** in der Rezirkulationsleitung (28) stromauf der Ventileinrichtung (31) ein Gasstrommesser (42) angeordnet ist.

4. Brennstoffzellensystem nach einem der Ansprüche 1 bis 3,
- dass der Bypass (33) eine Bypassleitung (34) aufweist, die einen zum Rezirkulationswärmeübertrager (32) führenden Vorlauf (36) mit einem vom Rezirkulationswärmeübertrager (32) kommenden Rücklauf (37) verbindet,
- dass der Bypass (33) eine Ventileinrichtung (35) aufweist, mit der die Oxidatorleitung (25) wahlweise mit der Bypassleitung (34) oder mit dem Vorlauf (36) oder mit dem Rücklauf (37) verbindbar ist, wobei insbesondere auch Mischzustände einstellbar sind.

5. Brennstoffzellensystem nach einem der Ansprüche 1 bis 4,
**dadurch gekennzeichnet,**
**dass** in der Oxidatorleitung (25) eine Ventileinrichtung (38) zum Verändern der Durchflussmenge in der Oxidatorleitung (25) angeordnet ist.

6. Brennstoffzellensystem nach Anspruch 5,
**dadurch gekennzeichnet,**
**dass** in der Oxidatorleitung (25) stromauf der Ventileinrichtung (38) ein Gasstrommesser (42) angeordnet ist.

7. Brennstoffzellensystem nach einem der Ansprüche 1 bis 6,
**dadurch gekennzeichnet,**
**dass** zur Versorgung der Brennstoffzelle (2) mit Kathodengas eine separate Fördereinrtchtung (9) vorgesehen ist.

8. Brennstoffzellensystem nach einem der Ansprüche 1 bis 7,
**dadurch gekennzeichnet,**
**dass** in der Rezirkulationsleitung (28) keine (andere) Fördereinrichtung angeordnet ist.

9. Brennstoffzellensystem nach einem der Ansprüche 1 bis 8,
**dadurch gekennzeichnet,**
**dass** eine Steuerung (39) vorgesehen ist, die mit den Komponenten des Brennstoffzellensystems (1) so zusammenwirkt und die so ausgestaltet ist, dass sie das Brennstoffzellensystem (1) zum Ausführen des Verfahrens nach Anspruch 12 oder 13 betreiben kann.

10. Verfahren zum Betreiben eines Brennstoffzellensystems (1) nach einem der Ansprüche 1 bis 9, bei dem während eines Kaltstarts der Bypass (33) zumindest so lange geöffnet ist, bis die Temperatur im Rezirkulationspfad oberhalb einer Kondensationstemperatur für im Anodengas enthaltene Rest-Kohlenwasserstoffe liegt.

11. Verfahren nach Anspruch 10,
**dadurch gekennzeichnet,**
**dass** der Bypass (33) zunehmend oder vollständig gesperrt wird, sobald die Temperatur des Reformers (3) und/oder des Rezirkulationswärmeübertragers (32) und/oder der in der Rezirkulationsleitung (28) angeordneten Ventileinrichtung (31) und/oder der Fördereinrichtung (26) und/oder des Anodenabgases und/oder des Gemischs aus Oxidator und zugemischtem rückgeführtem Anodenabgas eine jeweilige vorbestimmte Grenztemperatur erreicht.

## Claims

1. A fuel cell system, particularly in a motor vehicle,
- with at least one reformer (for generating a hydrogen gas-containing reformate gas from a hydrogen-containing fuel and an oxygen-containing oxidant,
- with at least one fuel cell (2) for generating electric current by converting reformate gas serving as anode gas with an oxygen gas-containing cathode gas,
with an oxidant supply device (24) for feeding oxidant to the reformer (3),
- wherein the oxidant supply device (24) comprises an oxidant line (25) and a delivery device (26) arranged therein,
- wherein a recirculation line (28) is provided, which on the one hand is connected to a waste gas line (12) discharging from the fuel cell (2),
- wherein the recirculation line (28) on the other hand is connected to the oxidant line (25) upstream of the delivery device (26),
**characterized**
- **in that** a recirculation heat transfer device (32) is provided, which on the one hand is incorporated in the recirculation line (28) and on the other hand in the oxidant line (25),
- **in that** the oxidant line (25) comprises a controllable bypass (33) for bypassing the recirculation heat transfer device (32).

2. The fuel cell system according to Claim 1, **characterized in that** in the recirculation line (28) a valve device (31) for changing the flow rate in the recirculation line (28) is arranged.

3. The fuel cell system according to Claim 2, **characterized in that** in the recirculation line (28) upstream of the valve device (31) a gas flow meter (42) is arranged.

4. The fuel cell system according to any one of the Claims 1 to 3, **characterized**
- **in that** the bypass (33) comprises a bypass line (34), which connects an advance (36) leading to the recirculation heat transfer device (32) to a return (37) coming from the recirculation heat transfer device (32),
- **in that** the bypass (33) comprises a valve device (35) with which the oxidant line (25) can be optionally connected to the bypass line (34) or to the advance (36) or to the return (37), wherein more preferably mixed states can also be set.

5. The fuel cell system according to any one of the Claims 1 to 4, **characterized in that** in the oxidant line (25) a valve device (38) for changing the flow rate in the oxidant line (25) is arranged.

6. The fuel cell system according to Claim 5, **characterized in that** in the oxidant line (25) upstream of the valve device (38) a gas flow meter (42) is arranged.

7. The fuel cell system according to any one of the Claims 1 to 6, **characterized in that** for the supply of the fuel cell (2) with cathode gas a separate delivery device (9) is provided.

8. The fuel cell system according to any one of the Claims 1 to 7, **characterized in that** in the recirculation line (28) no (other) delivery device is arranged.

9. The fuel cell system according to any one of the Claims 1 to 8, **characterized in that** a control (39) is provided, which interacts with the components of the fuel cell system (1) such and which is equipped such that it can operate the fuel cell system (1) for carrying out the method according to Claim 12 or 13.

10. A method for operating a fuel cell system (1) according to any one of the Claims 1 to 9, with which during a cold start the bypass (33) is opened at least for as long as the temperature in the recirculation path is above a condensation temperature for residual hydrocarbons contained in the anode gas.

11. The method according to Claim 10, **characterized in that** the bypass (33) is increasingly or completely blocked, as soon as the temperature of the reformer (3) and/or of the recirculation heat transfer device (32) and/or of the valve device (31) arranged in the recirculation line (28) and/or of the delivery device (26) and/or of the anode waste gas and/or of the mixture of oxidant and admixed returned anode waste gas reaches a respective predetermined limit temperature.

## Revendications

1. Système de cellules de combustible, en particulier sur un véhicule automobile, comprenant
- au moins un reformeur (3) pour générer un gaz de reformage contenant du gaz hydrogène à partir d'un combustible contenant de l'hydrogène et d'un oxydant contenant de l'oxygène,
- au moins une cellule de combustible (2) pour générer du courant électrique par transformation de gaz de reformage servant de gaz d'anode avec un gaz de cathode contenant du gaz oxygène,
- un dispositif d'alimentation en oxydant (24) pour l'arrivée d'oxydant au reformeur (3),
- le dispositif d'alimentation en oxydant (24) présentant une conduite d'oxydant (25) et un dispositif de transport (26) disposé à l'intérieur,
- une conduite de recirculation (28) étant prévue, laquelle est raccordée d'une part à une conduite de gaz brûlés (12) partant de la cellule de combustible (2),
- la conduite de recirculation (28) étant raccordée d'autre part en amont du dispositif de transport (26) à la conduite d'oxydant (25),
**caractérisé en ce que**
- un échangeur de chaleur à recirculation (32) est prévu, lequel est intégré d'une part dans la conduite de recirculation (28) et d'autre part dans la conduite d'oxydant (25),
- **en ce que** la conduite d'oxydant (25) comprend une dérivation (33) contrôlable pour le contournement de l'échangeur de chaleur à recirculation (32).

2. Système de cellules de combustible selon la revendication 1,
**caractérisé en ce que**
un dispositif de vanne (31) est disposé dans la conduite de recirculation (28) pour la variation du débit dans la conduite de recirculation (28).

3. Système de cellules de combustible selon la revendication 2,
**caractérisé en ce que**
un débitmètre de gaz (42) est disposé dans la conduite de recirculation (28) en amont du dispositif de vanne (31) .

4. Système de cellules de combustible selon l'une des revendications 1 à 3,
**caractérisé**
- **en ce que** la dérivation (33) présente une conduite de dérivation (34), qui relie un aller (36) allant à l'échangeur de chaleur à recirculation (32) à un retour (37) venant de l'échangeur de chaleur à recirculation (32),
- **en ce que** la dérivation (33) présente un dispositif de vanne (35), avec lequel la conduite d'oxydant (25) peut être reliée au choix à la conduite de dérivation (34) ou à l'aller (36) ou au retour (37), en particulier également des états de mélange pouvant être réglées.

5. Système de cellules de combustible selon l'une des revendications 1 à 4,
**caractérisé en ce que**
un dispositif de vanne (38) est disposé dans la conduite d'oxydant (25) pour modifier le débit dans la conduite d'oxydant (25).

6. Système de cellules de combustible selon la revendication 5,
**caractérisé en ce que**
un débitmètre de gaz (42) est disposé dans la conduite d'oxydant (25) en amont du dispositif de vanne (38).

7. Système de cellules de combustible selon l'une des revendications 1 à 6,
**caractérisé en ce que**
un dispositif de transport (9) séparé est prévu pour l'alimentation de la cellule de combustible (2) en gaz de cathode.

8. Système de cellules de combustible selon l'une des revendications 1 à 7,
**caractérisé en ce que**
aucun (autre) dispositif de transport n'est disposé dans la conduite de recirculation (28).

9. Système de cellules de combustible selon l'une des revendications 1 à 8,
**caractérisé en ce que**
il est prévu une commande (39), qui coopère avec les composants du système de cellules de combustible (1) et est conçue de telle sorte qu'elle peut faire fonctionner le système de cellules de combustible (1) pour mettre en oeuvre le procédé selon la revendication 12 ou 13.

10. Procédé pour faire fonctionner un système de cellules de combustible (1) selon l'une des revendications 1 à 9, dans lequel la dérivation (33) est ouverte pendant un démarrage à froid au moins jusqu'à ce que la température dans le chemin de recirculation se situe au-dessus d'une température de condensation pour des hydrocarbures résiduels contenus dans le gaz d'anode.

11. Procédé selon la revendication 10,
**caractérisé en ce que**
la dérivation (33) est bloquée de façon croissante ou complète dès que la température du reformeur (3) et/ou de l'échangeur de chaleur à recirculation (32) et/ou du dispositif de vanne (31) disposé dans la conduite de recirculation (28) et/ou du dispositif de transport (26) et/ou des gaz brûlés d'anode et/ou du mélange constitué d'oxydant et de gaz brûlés d'anode ajoutés et recyclés atteigne une température limite prédéfinie respective.
